# FASCICULE DE BREVET EUROPEEN

(11) **EP 1 615 490 B1**
(45) Date de publication et mention de la délivrance du brevet: **08.11.2006**
(21) Numéro de dépôt: 04742446.0
(22) Date de dépôt: 06.04.2004
(51) Int. Cl.: A01D 75/30, A01B 15/20

(54) **FAUCHEUSE AGRICOLE**
LANDWIRTSCHAFTLICHE MÄHMASCHINE
AGRICULTURAL MOWER

(30) Priorité: 11.04.2003 FR 0304550
(43) Date de publication de la demande: 18.01.2006
(73) Titulaire: KUHN S.A., 67706 Saverne Cedex (FR)
(72) Inventeur: NEUERBURG, Horst, F-67700 Saverne (FR); FRUMHOLTZ, Johnny, F-77780 Bourron Marlotte (FR); WALTER, Rene, F-57620 Goetzenbruck (FR)
(74) Mandataire: Andres, Jean-Claude
(86) Numéro de dépôt international: PCT/FR2004/000856
(87) Numéro de publication internationale: WO 2004/091282

(56) Documents cités:
- DE-U- 29 816 837
- FR-A- 2 598 879
- US-A- 4 607 716
- US-A1- 2002 134 558

## Description

La présente invention se rapporte au domaine technique général du machinisme agricole. Elle concerne plus précisément une faucheuse agricole comportant :
- au moins une mité de travail destinée à couper un produit sur pied,
- un dispositif de liaison destiné à lier ladite au moins une unité de travail à un véhicule moteur, lors du travail ledit dispositif de liaison permet un déplacement transversal de ladite au moins une unité de travail par rapport à une direction d'avance de ladite faucheuse, et
- un organe de manoeuvre destiné à engendrer ledit déplacement transversal de ladite au moins une unité de travail.

Une telle faucheuse agricole est connue de l'homme du métier, notamment par le document **FR-A-2 717 343**. Ce document antérieur décrit un engin agricole constitué d'un véhicule moteur et de trois unités de travail destinées à couper un produit sur pied, tel que de l'herbe par exemple. Cet engin agricole comporte plus précisément une unité de travail frontale et deux unités de travail latérales. L'unité de travail frontale est disposée devant ledit véhicule moteur. Les unités de travail latérales sont disposées quant à elles de part et d'autre d'un axe longitudinal dudit véhicule moteur et en arrière de l'unité de travail frontale.

Chaque unité de travail latérale est liée audit véhicule moteur au moyen d'articulations. Lors du travail ces articulations permettent avantageusement aux unités de travail latérales de suivre les irrégularités du sol. En effet, les unités de travail latérales peuvent ainsi se déplacer suivant une direction verticale indépendamment de la position dudit véhicule moteur. Lors du transport, ces articulations permettent de relever les unités de travail latérales par basculement de 90°.

Pour sa part, l'unité de travail frontale est liée audit véhicule moteur au moyen d'un dispositif de levage. Ce dispositif de levage permet également un mouvement relatif suivant une direction sensiblement verticale de l'unité de travail frontal par rapport audit véhicule moteur. Lors du travail, ce mouvement relatif permet avantageusement à l'unité frontale de suivre les irrégularités du sol. Ce mouvement relatif sensiblement vertical est également utilisé pour obtenir une position de transport.

D'une manière avantageuse, la disposition de ces trois unités de travail est telle que la zone de travail de chaque unité latérale chevauche quelque peu la zone déjà travaillée de l'unité frontale. Ce chevauchement, appelé surcoupe, des zones individuelles de travail constitue une marge de sécurité que l'on se fixe afin de garantir une coupe parfaite du produit sur l'intégralité de la zone de travail de l'engin agricole.

Or lorsqu'un tel engin agricole suit une trajectoire curviligne, la valeur de la surcoupe entre l'unité de travail frontale et l'unité de travail latérale située à l'intérieure du virage tend naturellement à diminuer. Afin de conserver tout de même une surcoupe minimale malgré ce phénomène, l'unité de travail frontale décrite dans ce document antérieur peut avantageusement être déplacée transversalement par rapport à une direction d'avance du véhicule moteur. Pour ce faire, le dispositif de levage comporte en sus des bielles dessinant un parallélogramme déformable suivant un plan horizontal. La déformation de ce parallélogramme est assurée au moyen d'un vérin. De plus dans ce document antérieur, le vérin est alimenté en fluide sous pression en fonction de l'orientation du volant de direction du véhicule moteur. Ainsi la position transversale de l'unité de travail frontale est corrigée automatiquement lors des trajectoires curvilignes.

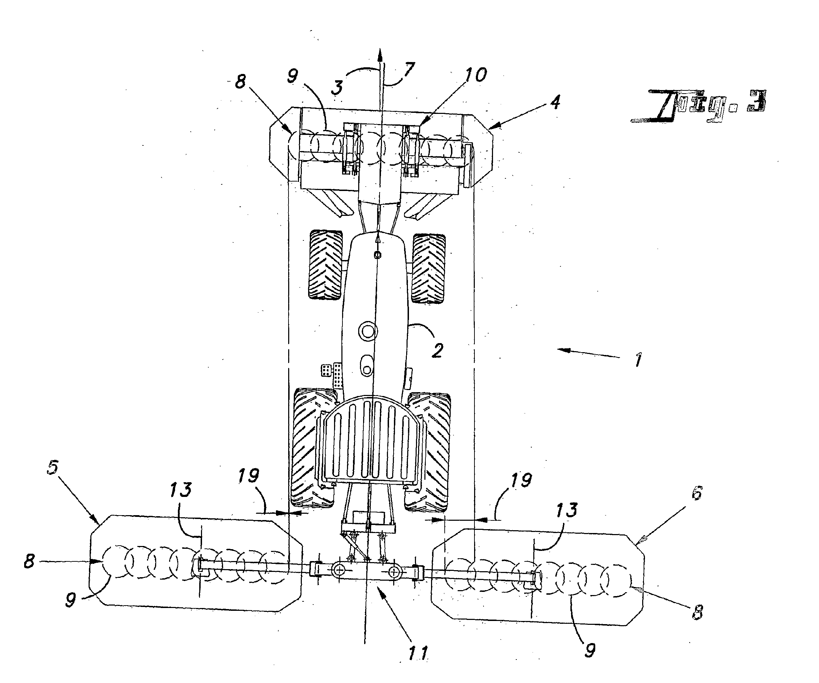

Cependant il s'avère que lorsqu'un tel engin agricole travaille sur un terrain en dévers, la valeur de la surcoupe entre les unités de travail tend à diminuer même lors de trajectoires rectilignes. En se déplaçant transversalement à une pente, tout véhicule tend en effet à se mettre en crabe c'est à dire que l'axe longitudinal du véhicule s'incline quelque peu par rapport de la direction d'avance. A la lumière de la figure 3, cette inclinaison engendre un décalage entre la zone de coupe des unités de travail latérales et la zone de coupe de l'unité de travail frontale, d'où une modification de la surcoupe. Pour les engins agricoles dont la distance entre les unités de travail latérales et l'unité de travail frontale est relativement grande, la valeur de ce décalage peut atteindre voir dépasser la valeur de la surcoupe. Dans un tel cas de figure, l'engin agricole laissera derrière lui des bandes de produit non coupé. La présence de bandes de produit non coupé nécessite un passage supplémentaire de l'engin agricole, d'où une perte de temps pour l'utilisateur.

Cette variation de la surcoupe lors du travail en dévers se rencontre également lorsque le véhicule moteur est lié à une seule faucheuse, qu'elle soit de type portée ou de type traînée. Suivant le sens de la pente, le mise en crabe du véhicule porteur et/ou de la faucheuse traînée tend également à augmenter ou à diminuer la valeur de la surcoupe entre la zone travaillée par ce passage et la zone travaillée lors du passage précédent. Comme décrit précédemment, une diminution trop importante de la surcoupe peut entraîner l'apparition de bandes de produit coupé. De même une augmentation trop importante de la surcoupe est également un inconvénient car alors la largeur de travail de la faucheuse ne sera exploitée que partiellement, d'où une baisse de rendement. Le document DE-U-298 16 837 mesure la valeur réelle de la surcoupe et la corrige par une translation, perpendiculaire à l'axe d'avance de la machine, de l'unité de travail frontale.

Le but de la présente invention est de garantir de manière automatique la surcoupe optimale d'une faucheuse agricole lors du travail en dévers.

A cet effet, la faucheuse selon la présente invention est caractérisée par le fait qu'elle comporte en sus un dispositif de pilotage destiné à piloter l'organe de manoeuvre en fonction de l'angle de roulis de ladite faucheuse agricole, de manière à maintenir une valeur optimale de surcoupe.

Ainsi la position transversale de l'unité de travail par rapport au véhicule moteur est modifiée de manière automatique en fonction du dévers du terrain. Ce déplacement transversal de l'unité de travail permet de compenser toute mise en crabe et par conséquent de garantir une surcoupe optimale.

D'autres caractéristiques de l'invention, à considérer séparément ou dans toutes leurs combinaisons possibles, apparaîtront encore dans la description suivante d'exemples de réalisation non limitatifs de l'invention représentés sur les dessins annexés sur lesquels :
- la **figure 1** représente vu de dessus une faucheuse conforme à la présente invention travaillant sur un terrain horizontal,
- la **figure 2** représente un agrandissement de la zone repérée II sur la figure 1,
- la **figure 3** représente la faucheuse de la figure 1 lors du travail en dévers, le dispositif de pilotage n'étant pas activé de manière à représenter l'état de la technique,
- la **figure 4** représente la faucheuse de la figure 2 avec le dispositif de pilotage activé,
- la **figure 5** représente de manière schématique un dispositif de pilotage,
- la **figure 6** représente vu de dessus une autre faucheuse conforme à la présente invention travaillant sur un terrain horizontal,
- la **figure 7** représente la faucheuse de la figure 6 lors du travail en dévers avec le dispositif de pilotage activé, et
- la **figure 8** représente la faucheuse de la figure 6 en position de transport.

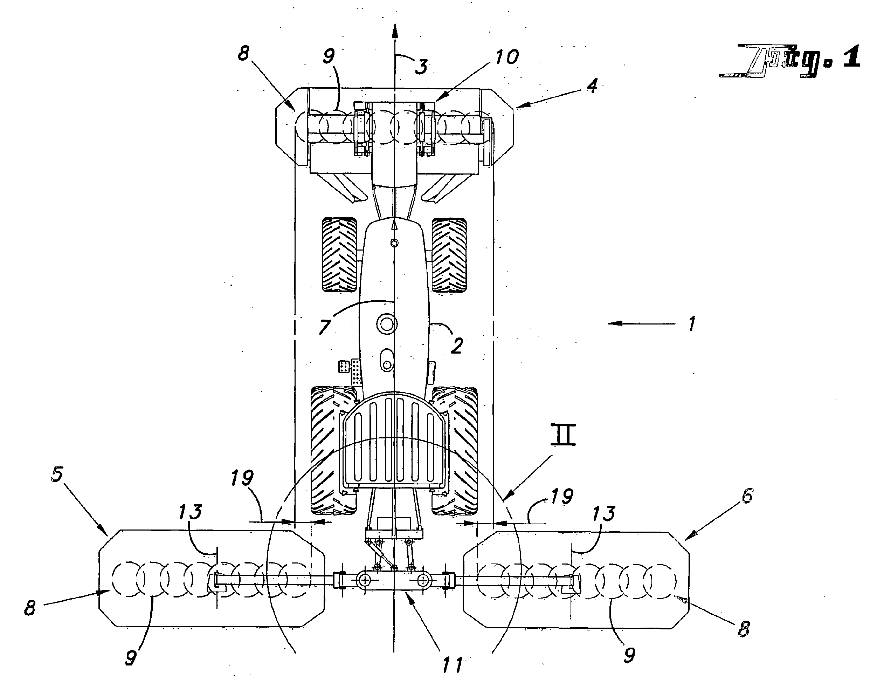

La figure 1 représente un premier exemple de réalisation d'une faucheuse agricole (1) conforme à la présente invention. Ladite faucheuse (1) est attelée à un véhicule moteur (2) qui la tire suivant une direction et un sens d'avance indiqué par la flèche (3). Dans la suite de la description, les notions suivantes "avant" et "arrière", "devant" et "derrière" sont définies par rapport au sens d'avance (3) et les notions "droite" et "gauche" sont définies en regardant ladite faucheuse (1) de l'arrière dans le sens d'avance (3).

Dans ce premier exemple de réalisation, ladite faucheuse (1) est une combinaison de trois unités de travail (4, 5, 6). D'une manière plus précise, ladite faucheuse (1) comporte une unité de travail frontale (4) et deux unités de travail latérales (5, 6). A la lumière de la figure 1 notamment, ladite unité de travail frontale (4) est disposée en avant dudit véhicule moteur (2) et à cheval sur un axe longitudinal (7) de ce dernier. Lesdites unités de travail latérales (5, 6) sont par contre disposées de part et d'autre dudit axe longitudinal (7) et en arrière de ladite unité de travail frontale (4). Afin d'obtenir une meilleure répartition des masses, lesdites unités de travail latérales (5, 6) sont avantageusement disposées derrière ledit véhicule moteur (2).

D'une manière connue de l'homme de l'art, chaque unité de travail (4, 5, 6) comporte un dispositif de coupe (8) destiné à couper un produit sur pied tel que de l'herbe par exemple. Pour ce faire ledit dispositif de coupe (8) comporte à son tour au moins un organe de coupe (9) entraîné en rotation autour d'un axe dirigé vers le haut. La vitesse de rotation relativement élevée, approximativement 3000 tours par minute, dudit organe de coupe (9) permet à ce dernier de couper par impact ledit produit sur pied. A titre d'exemple non limitatif, les dispositifs de coupe (8) représentés sur les figures comportent chacun huit organes de coupe (9) disposés suivant une ligne. Chaque unité de travail (4, 5, 6) peut ainsi couper sur une largeur de trois mètres environ. D'une manière également connue de l'homme de l'art, chaque unité de travail (4, 5, 6) peut en sus comporter un dispositif de traitement destiné à accélérer le séchage du produit coupé et/ou un dispositif de dépose destiné à calibrer l'andain formé par le produit une fois coupé. De tels dispositifs de traitement et de dépose n'ont pas été représentés sur les figures. De même les éléments de transmission destinés à entraîner lesdites unités de travail (4, 5, 6) à partir des prises de force dudit véhicule moteur (2) étant largement connus de l'homme de l'art, ces éléments de transmission n'ont pas été représentés sur les figures.

Dans ce premier exemple de réalisation, ladite faucheuse (1) comporte un premier dispositif de liaison (10) destiné à lier ladite unité de travail frontale (4) audit véhicule moteur (2). D'une manière préférentielle, ledit premier dispositif de liaison (10) permet lors du travail à ladite unité de travail frontal (4) de suivre les irrégularités du sol indépendamment de la position dudit véhicule moteur (2). Pour ce faire, ledit premier dispositif de liaison (10) permet à la fois un mouvement de translation sensiblement vertical et un mouvement de roulis entre ladite unité de travail frontale (4) et ledit véhicule moteur (2). D'une manière également préférentielle, ledit premier dispositif de liaison (10) permet lors du travail de reporter au moins une partie du poids de ladite unité de travail frontale (4) sur ledit véhicule moteur (2). En réduisant ainsi la pression au sol exercée par ladite unité de travail frontal (4), on diminue notamment l'effort de traction nécessaire pour déplacer ladite faucheuse agricole (1). Pour réaliser ces différentes fonctions, ledit premier dispositif de liaison (10) comporte à titre d'exemple un système de bielles et des ressorts. Ces différents moyens ou leurs équivalents techniques et leur agencement étant connus de l'homme de l'art, ledit premier dispositif de liaison (10) ne sera pas décrit d'avantage.

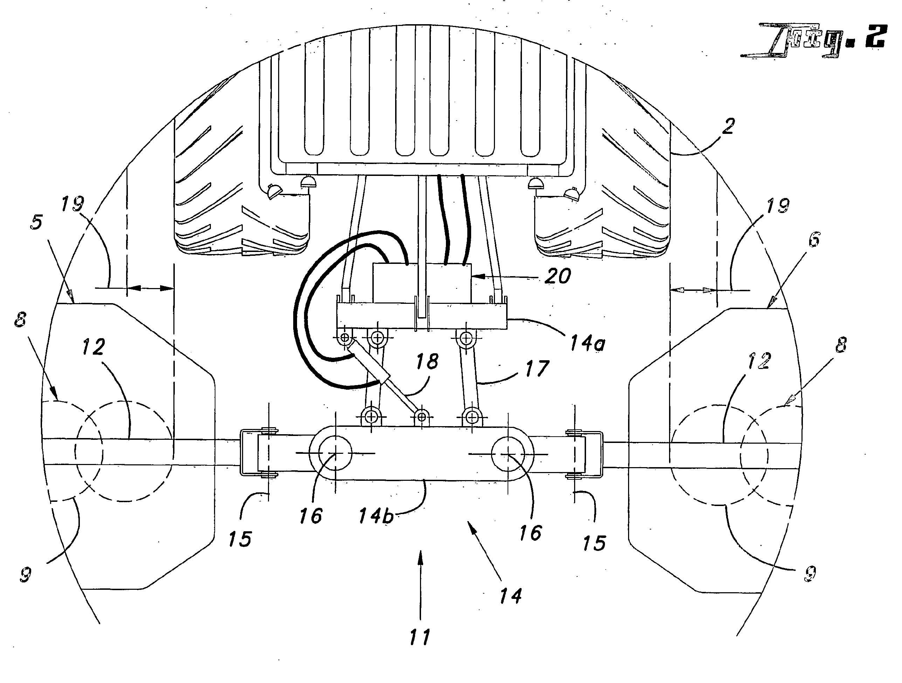

Dans ce premier exemple de réalisation, ladite faucheuse (1) comporte également un deuxième dispositif de liaison (11) destiné à lier lesdites unités de travail latérales (5, 6) audit véhicule moteur (2). A la lumière notamment des figures 1 et 2, chaque unité de travail latérale (5, 6) est liée à une extrémité d'un bras support respectif (12) au moyen d'une première articulation (13) d'axe dirigé suivant la direction d'avance (3). L'autre extrémité dudit bras support (12) est liée à un châssis (14) au moyen d'une deuxième articulation (15) d'axe également dirigé suivant ladite direction d'avance (3) et au moyen d'une troisième articulation (16) d'axe dirigé vers le haut. Pour sa part, ledit châssis (14) est lié audit véhicule moteur (2).

D'une manière préférentielle, l'axe de ladite deuxième articulation (15) et l'axe de ladite troisième articulation (16) sont concourants. De même, l'axe de ladite première articulation (13) et l'axe de ladite deuxième articulation (15) sont avantageusement parallèles. Ainsi ladite première et ladite deuxième articulations (13, 15) permettent à ladite unité de travail latérale correspondante (5, 6) de suivre les irrégularités du terrain indépendamment de la position dudit véhicule moteur (2). Ladites troisième articulation (16) permet pour sa part à ladite unité de travail latérale correspondante (5, 6) de s'esquiver vers l'arrière en cas de rencontre avec un obstacle.

D'une manière connue de l'homme de l'art, ledit deuxième dispositif de liaison (11) comporte en sus des moyens pour reporter au moins une partie du poids desdites unités de travail latérales (5, 6) sur ledit châssis (14) donc sur ledit véhicule moteur (2). Il est également prévu des organes moteurs pour amener par pivotement autour de ladite deuxième articulation (15) lesdites unités de travail latérales (5, 6) d'une position de travail sensiblement horizontale à une position de transport sensiblement verticale et inversement. Ces différents éléments étant largement connus, ils ne seront donc pas décrits d'avantage.

Dans ce premier exemple de réalisation, ledit deuxième dispositif de liaison (11) permet lors du travail un déplacement transversal desdites unités de travail latérales (5, 6) par rapport à un axe longitudinal (7) dudit véhicule moteur (2). Pour ce faire et à la lumière de la figure 2, ledit châssis (14) comporte une partie avant (14a) lié audit véhicule moteur (2) et une partie arrière (14b) liée audits bras support (12). Ledit châssis (14) comporte en sus deux bielles (17) dont les extrémités sont liées d'une part à ladite partie avant (14a) et d'autre part à ladite partie arrière (14b) au moyen d'articulations d'axe dirigé vers le haut. Lesdites deux bielles (17) réalisent ainsi un quadrilatère déformable permettant un déplacement relatif de ladite partie arrière (14b) par rapport à ladite partie avant (14) suivant une direction transversale. Pour déformer le quadrilatère ainsi créer, il est prévu un organe de manoeuvre (18). Dans l'exemple représenté sur la figure 2, ledit organe de manoeuvre (18) est réalisé au moyen d'un vérin hydraulique (18) dont les extrémités sont liées d'une part à ladite partie avant (14a) et d'autre part à ladite partie arrière (14b) au moyen d'articulations d'axe dirigé vers le haut. D'une manière préférentielle, ledit vérin (18) est un vérin à double effet. L'alimentation dudit vérin (18) en fluide sous pression s'effectue à partir d'une pompe présente sur ledit véhicule moteur (2) et au moyen de conduites.

Selon une caractéristique importante de la présente invention, ladite faucheuse agricole (1) comporte en sus un dispositif de pilotage (20) destiné à piloter ledit organe de manoeuvre (18) en fonction de l'angle de roulis de ladite faucheuse (1).

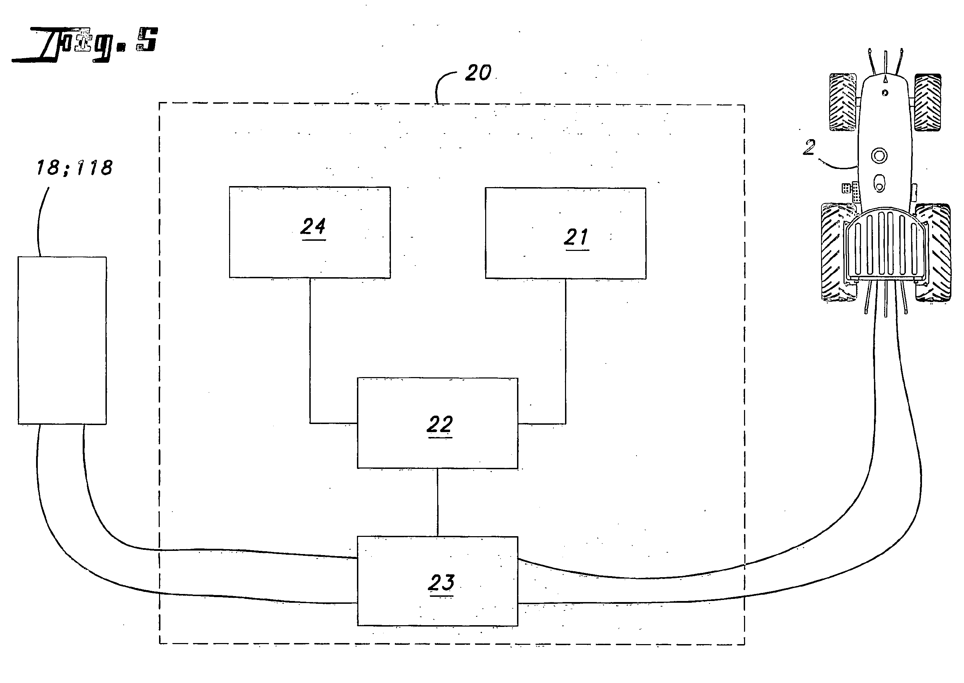

Dans l'exemple de réalisation représenté schématiquement à la figure 5, ledit dispositif de pilotage (20) comporte à cet effet un capteur (21) permettant de mesurer par rapport à l'horizontal l'angle d'inclinaison de ladite faucheuse (1) autour de l'axe longitudinal (7) dudit véhicule moteur (2), c'est à dire l'angle de roulis. A titre d'exemple non limitatif, un tel capteur (21) peut être réalisé au moyen d'un inclinomètre. Ledit dispositif de pilotage (20) comporte également une unité de commande (22) destinée à traiter l'information provenant dudit capteur (21). Ledit dispositif de pilotage (20) comporte en sus un distributeur hydraulique (23) disposé sur les conduites reliant ledit vérin (18) audit véhicule moteur (2). Ledit distributeur hydraulique (23) permet en fonction des ordres donnés par ladite unité de commande (22) d'alimenter ou non en fluide sous pression ledit vérin (18). Ainsi lorsque ledit véhicule moteur (2) travail sur un terrain en dévers, ledit dispositif de pilotage (20) provoque automatiquement la rentrée ou la sortie de la tige dudit vérin (18) de manière à déplacer transversalement lesdites unités de travail latérales (5, 6).

D'une manière préférentielle, ledit dispositif de pilotage (20) comporte en outre un moyen de détection (24) pour informer ladite unité de commande (22) lorsque lesdites unités de travail latérales (5, 6) ont atteint une position centrale, c'est à dire lorsque lesdites unités de travail latérales (5, 6) sont disposées symétriquement de part et d'autre dudit axe longitudinal (7). Ainsi ledit dispositif de pilotage (20) est capable de recentrer automatiquement lesdites unités de travail latérales (5, 6) lorsque ledit véhicule moteur (2) évolue à nouveau sur un terrain horizontal. Dans ce premier exemple de réalisation, un tel recentrage automatique desdites unités de travail latérales (5, 6) est également avantageux pour la mise en position de transport de ladite faucheuse (1).

A titre d'exemple, un tel moyen de détection (24) peut être réalisé par un contacteur fixé à l'une desdites parties (14a, 14b) de châssis (14) et palpant l'autre desdites parties (14a, 14b). Ce contacteur transmet alors un signal à ladite unité de commande (22) lorsque lesdites unités de travail latérales (5, 6) ont atteint ladite position centrale.

Cette fonction de recentrage peut également être réalisée au moyen d'un vérin comportant deux tiges indépendantes. D'une manière connue de l'homme du métier, un tel vérin est capable de définir au moins trois positions distinctes. Une position rétractée, une position intermédiaire et une position déployée. Avec un tel vérin et un distributeur adéquat (23), ledit dispositif de pilotage (20) est capable de recentrer lesdites unités de travail latérales (5, 6) sans faire appel audit moyen de détection (24).

D'une manière avantageuse ladite unité de commande (22) détermine, pour chaque valeur de l'angle de roulis, la valeur optimale du déplacement transversal à donner auxdites unités de travail latérales (5, 6). A cet effet, ledit moyen de détection (24) est de préférence réalisé par un capteur de position informant en permanence ladite unité de commande (22) de la position relative de ladite partie avant (14a) par rapport à ladite partie arrière (14b) du châssis (14). Ainsi ladite unité de commande (22) agit de manière adéquate sur ledit distributeur (23) tant que la valeur indiquée par ledit capteur de position ne correspond pas au déplacement optimal déterminé.

A titre d'exemple, ledit déplacement optimal peut être défini comme étant une fonction continue de l'angle de roulis. Dans un autre exemple de réalisation, ledit déplacement transversal optimal peut être défini de manière discontinue. Ainsi pour différents seuils atteints par l'angle de roulis, une valeur spécifique est affectée comme déplacement optimal. On peut également utiliser une combinaison de ces deux manières de déterminer ledit déplacement optimal.

Ladite faucheuse (1) selon la présente invention fonctionne de la manière suivante.

Sur un terrain horizontal, lesdites unités de travail latérales (5, 6) sont disposées symétriquement de part et d'autre de l'axe longitudinal (7) dudit véhicule moteur (2). A la lumière des figures 1 et 2, cette disposition est telle que la zone de travail de chaque unité de travail latérale (5, 6) chevauche quelque peu la zone déjà travaillée par ladite unité de travail frontale (4). Ce chevauchement, appelé surcoupe (19), des zones individuelles de travail constitue une marge de sécurité que l'on se fixe afin de garantir une coupe parfaite du produit sur l'intégralité de la zone de travail de ladite faucheuse (1). A titre indicatif la valeur d'une telle surcoupe est de l'ordre de 250 millimètres.

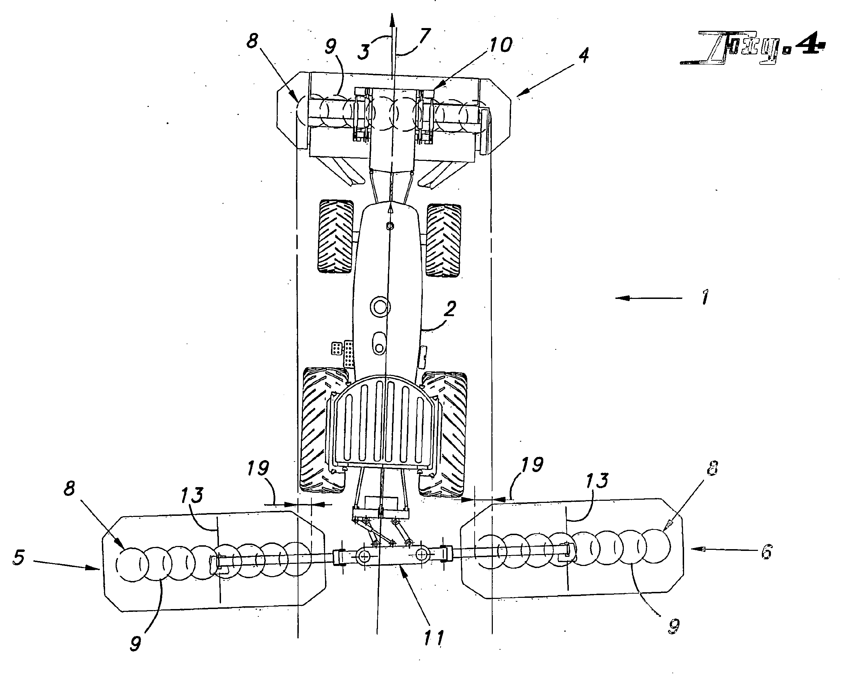

Sur un terrain en dévers, c'est à dire lorsque ledit véhicule moteur (2) se déplace transversalement à une pente comme représenté aux figures 3 et 4, ledit véhicule moteur (2) a tendance à glisser vers le bas de la pente. Ainsi bien qu'étant sur une trajectoire rectiligne, l'axe longitudinal (7) dudit véhicule moteur (2) s'incline par rapport à ladite direction d'avance (3). Il en résulte une diminution de ladite surcoupe (19) entre ladite unité de travail frontale (4) et l'une desdites unités de travail latérale (5, 6). A la lumière de la figure 3 qui représente l'état de la technique, il peut ainsi arriver que la valeur de ladite surcoupe (19) passe en dessous d'un seuil minimal et même qu'elle devienne nulle. Dans de tels cas et d'une manière inacceptable pour l'utilisateur, ladite faucheuse agricole (1) laisserait derrière elle des bandes de produit non coupé. Pour éviter cela, à la lumière de la figure 4 et selon la présente invention, ledit dispositif de pilotage (20) commande ledit organe de manoeuvre (18) afin de déplacer transversalement lesdites unités de travail latérales (5, 6). Ainsi d'une manière entièrement automatique, ledit dispositif de pilotage (20) est capable de maintenir une valeur optimale de surcoupe (19) lors du travail en dévers.

D'une manière préférentielle, et à la lumière de la figure 2 notamment, lesdites bielles (17) liant ladite partie avant (14a) et ladite partie arrière (14b) du châssis (14) forment avantageusement un trapèze convergeant vers l'avant. Ainsi tout déplacement transversal desdites unités de travail latérales (5, 6) s'accompagne également d'un pivotement autour d'un axe dirigé vers le haut. Cette combinaison des mouvements de translation et de pivotement augmente avantageusement l'amplitude de variation de la surcoupe (19).

D'une manière également préférentielle, ledit capteur (21) permet en sus de mesurer l'angle de lacet dudit véhicule moteur (2). Ledit dispositif de pilotage (20) est ainsi capable de déterminer le rayon de courbure de la trajectoire prise par ledit véhicule moteur (2) et de corriger la position desdites unités de travail latérales (5, 6) en conséquence. De ce fait, la valeur de la surcoupe (19) est maintenue optimale même lors de trajectoire curviligne effectuée sur un terrain horizontal. A titre d'exemple non limitatif, un tel capteur (21) est réalisé au moyen d'une centrale à inertie.

Dans le premier exemple de réalisation représenté sur les figures 1 à 4, ladite faucheuse (1) est une combinaison de trois unités de travail (4, 5, 6). Cependant la présente invention s'applique également aux faucheuses, non représentées, comportant une unité de travail frontale (4) et une seule unité de travail latérale (6), toutes deux portées par un véhicule moteur (2).

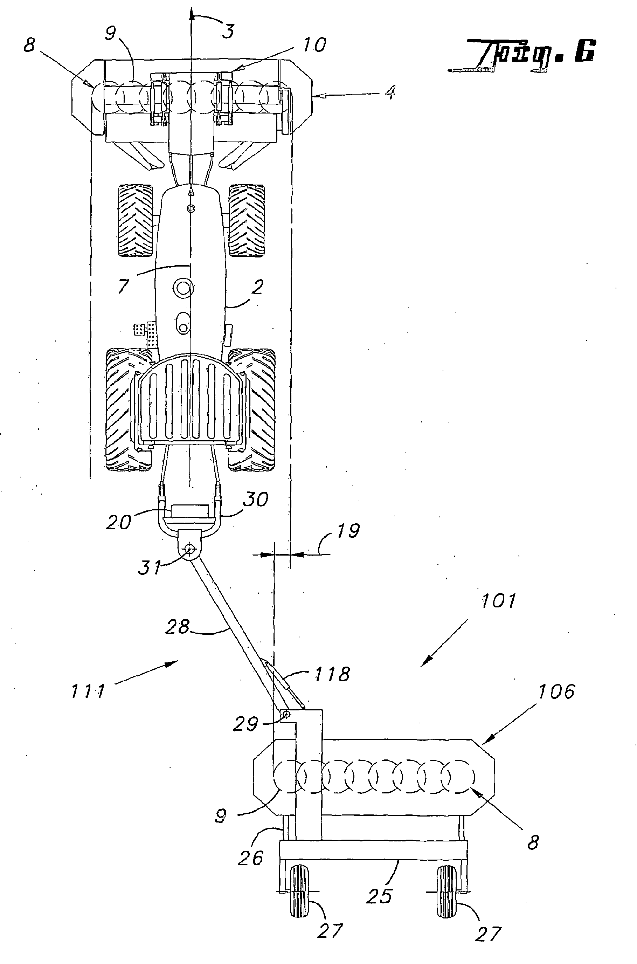

Les figures 6 à 8 représentent, suivant la même vue que pour les figures 1 à 4, un deuxième exemple de réalisation d'une faucheuse conforme à la présente invention. Cette faucheuse (101) comporte un certain nombre d'éléments qui ont été décrits précédemment. Ces éléments garderont par conséquent le même numéro de repère et ne seront pas décrits une nouvelle fois. Elle comporte également un certain nombre d'éléments qui sont comparables à des éléments de ladite faucheuse (1) décrits précédemment. Ces éléments seront affectés du même numéro de repère que ces éléments comparables de ladite faucheuse (1) mais augmenté de 100. Ils ne seront décrits que si cela s'avère nécessaire.

Ainsi ladite faucheuse (101) comporte une unité de travail frontale (4) disposée en avant dudit véhicule moteur (2) et à cheval sur un axe longitudinal (7) de ce dernier. Ladite unité de travail frontale (4) est semblable celle décrit dans le premier exemple de réalisation. Ladite faucheuse (101) comporte également une unité de travail latérale (106). Ladite unité de travail latérale (106) est liée audit véhicule moteur (2) au moyen d'un dispositif de liaison (111).

Dans ce deuxième exemple de réalisation, ladite unité de travail latérale (106) est du type traînée. D'une manière connue, ledit dispositif de liaison (111) comporte donc un châssis (25), un timon (28) et une tête d'attelage (30). Ainsi à la lumière des figures 6 à 8, ladite unité de travail latérale (106) est liée audit châssis (25) au moyen d'une suspension (26) connue de l'homme du métier. Ladite suspension (26) permet avantageusement à ladite unité de travail latérale (106) de suivre les irrégularités du sol indépendamment de la position dudit châssis (25). Ladite suspension (26) permet également de reporter au moins une partie du poids de ladite unité de travail latérale (106) sur ledit châssis (25). Ledit châssis (25) repose sur le sol, au travail comme au transport, au moyen de deux roues (27). L'une des extrémités dudit timon (28) est liée audit châssis (25) au moyen d'une articulation (29) d'axe dirigé vers le haut. L'autre extrémité dudit timon (28) est liée à ladite tête d'attelage (30) au moyen d'une autre articulation (31) d'axe également dirigé vers le haut. Pour sa part, ladite tête d'attelage (30) est destinée à être lier audit véhicule moteur (2). Il est également prévu un organe de manoeuvre (118) permettant de pivoter ledit timon (28) par rapport audit châssis (25) autour de ladite articulation (29). A la lumière des figures 6 à 8, ledit organe de manoeuvre (118) est réalisé au moyen d'un vérin hydraulique (118) dont les extrémités sont liées d'une part audit timon (28) et d'autre part audit châssis (25) au moyen d'articulations d'axe dirigé vers le haut. D'une manière préférentielle, ledit vérin (118) est un vérin à double effet. L'alimentation dudit vérin (118) en fluide sous pression s'effectue à partir d'une pompe présente sur ledit véhicule moteur (2) et au moyen de conduites.

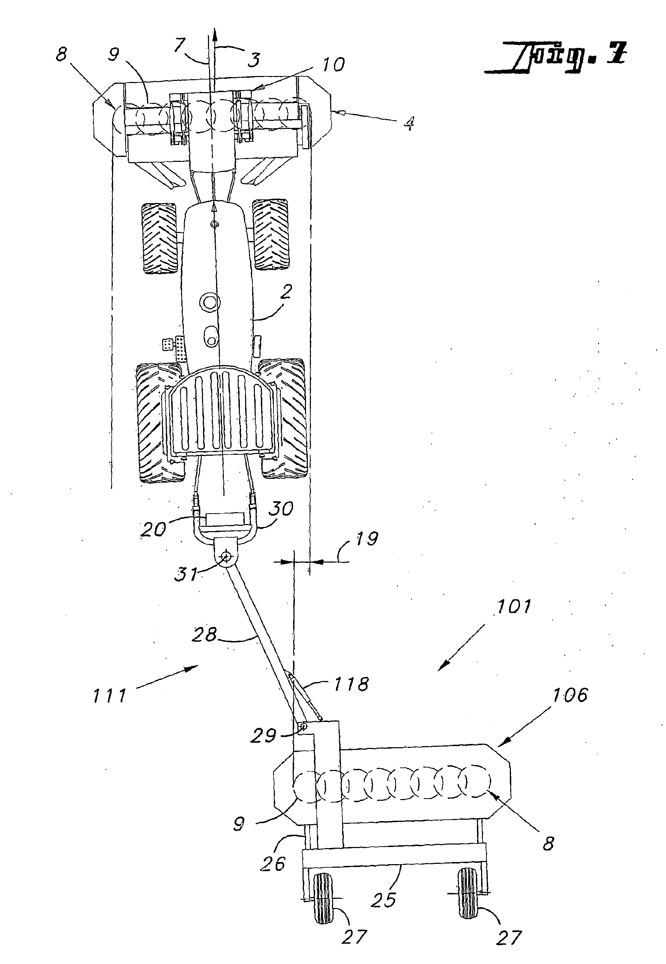

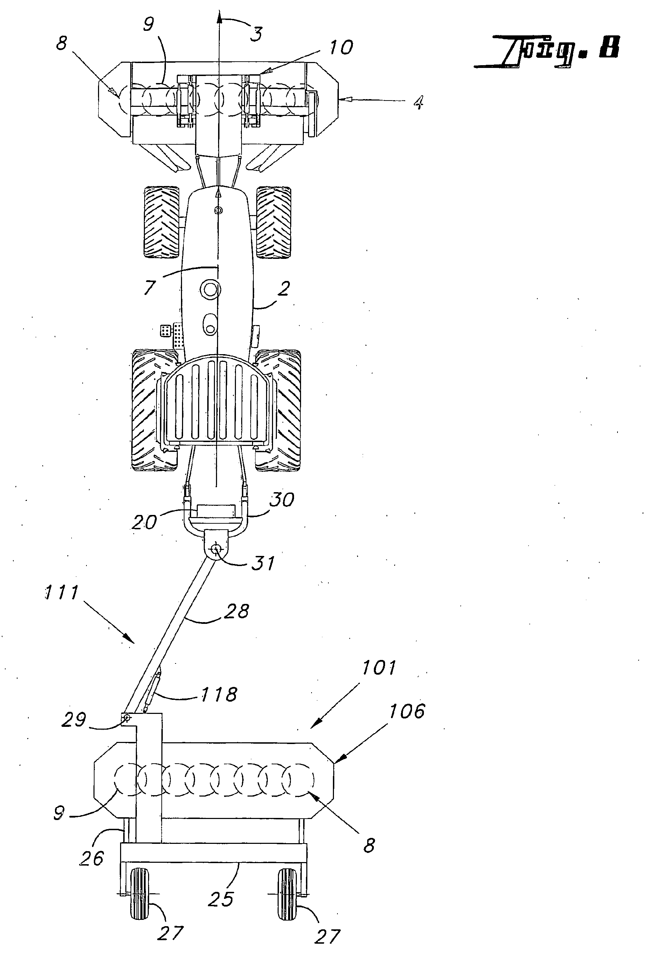

Lorsque ladite faucheuse (101) être tractée par ledit véhicule moteur (2), ledit dispositif de liaison (111) ainsi constitué permet un déplacement transversal de ladite unité de travail latérale (106). En effet à la lumière de la figure 8, le raccourcissement dudit vérin (118) permet de positionner ladite unité de travail latérale (16) dans le prolongement dudit véhicule moteur (2). Cette position est utilisée notamment lors du transport sur la voie publique. Par contre un allongement dudit vérin (118) permet de positionnement ladite unité de travail latérale (106) en position de travail telle que représentée sur les figures 6 et 7.

D'une manière particulièrement avantageuse, ladite faucheuse (101) comporte également un dispositif de pilotage (20) semblable à celui décrit dans le premier exemple de réalisation. Tout comme pour le premier exemple de réalisation, ledit dispositif de pilotage (20) agit automatiquement sur ledit vérin (118) de manière à garantir une surcoupe minimale (19) lors du travail en dévers notamment.

Dans ce deuxième exemple de réalisation, ledit moyen de détection (24) détecte cette fois la position angulaire dudit timon (28) par rapport audit châssis (25) autour de ladite articulation (29). Cette position angulaire dudit timon (28) permet de déterminer la position transversale de ladite unité de travail (106). Ledit moyen de détection (24) permet ainsi audit dispositif de pilotage (20) de replacer ladite faucheuse (101) selon la position de la figure 6 lorsque ledit véhicule moteur (2) évolue à nouveau sur un terrain horizontal.

Les faucheuses agricoles (1 ; 101) qui viennent d'être décrites ne sont que des exemples de réalisation qui ne sauraient en aucun cas limiter le domaine de protection défini par les revendications suivantes.

Ainsi ladite faucheuse (1 ; 101) ne comporte pas obligatoirement une unité de travail (4) disposée en avant dudit véhicule moteur (2). Dans ce cas, ladite surcoupe (19) est mesurée à partir de la zone coupée lors du passage précédent.

De même, ledit dispositif de pilotage (20) peut très bien ne pas contenir ledit capteur (21) destiné à mesurer l'angle de roulis de ladite faucheuse (1 ; 101). En effet selon un autre exemple de réalisation, l'information concernant l'angle de roulis de ladite faucheuse (1 ; 101) peut provenir d'un capteur déjà présent sur ledit véhicule moteur (2).

## Revendications

1. Faucheuse agricole comportant:
- au moins une unité de travail frontale (4) destinée à couper un produit sur pied,
- au moins une unité de travail latérale (5, 6 ; 106) destinée à couper un produit sur pied,
- des dispositifs de liaison (10, 11 ; 111) destinés à lier lesdites unités de travail (4, 5, 6 ; 106) à un véhicule moteur (2),
- au moins un desdits dispositifs de liaison (10, 11 ; 111) permettant, lors du travail, un déplacement transversal de l'unité de travail (4, 5, 6 ; 106) correspondante par rapport à une direction d'avance (3) de ladite faucheuse (1 ; 101),
- un organe de manoeuvre (18 ; 118) destiné à engendrer ledit déplacement transversal de ladite au moins une unité de travail (4, 5, 6 ; 106),
- un dispositif de pilotage (20) destiné à piloter ledit organe de manoeuvre (18 ; 118),
***caractérisée par le fait que*** le dispositif de pilotage (20) comporte un capteur (21) destiné à mesurer l'angle de roulis de ladite faucheuse (1 ; 101) et une unité de commande (22) traitant l'information provenant dudit capteur (21) et commandant un distributeur (23) destiné à agir sur ledit organe de manoeuvre (18 ; 118), de manière à déplacer transversalement ladite au moins une unité de travail latérale (5, 6 ; 106) pour maintenir une valeur optimale de surcoupe (19).

2. Faucheuse selon la revendication 1, ***caractérisée par le fait que*** le dispositif de liaison (11) de ladite au moins une unité de travail latérale (5, 6) comporte une partie avant (14a) destinée à être liée audit véhicule moteur (2) et une partie arrière (14b) à laquelle est liée ladite au moins une unité de travail (5, 6), ladite partie avant (14a) et ladite partie arrière (14b) sont liées l'une à l'autre au moyen de bielles (17) définissant un quadrilatère déformable.

3. Faucheuse selon la revendication 2, ***caractérisée par le fait que*** lesdites bielles (17) définissent un trapèze convergeant vers l'avant.

4. Faucheuse selon la revendication 2 ou 3, ***caractérisée par le fait que*** ladite partie arrière (14b) supporte deux unités de travail (5, 6).

5. Faucheuse selon l'une quelconque des revendications 2 à 4, ***caractérisée par le fait que*** ledit organe de manoeuvre (18) est lié d'une part à ladite partie avant (14a) et d'autre part à ladite partie arrière (14b).

6. Faucheuse selon la revendication 1, ***caractérisée par le fait que*** ledit dispositif de liaison (111) de ladite au moins une unité de travail latérale (106) comporte un châssis (25) reposant sur le sol au moyen de roues (27) et auquel est liée ladite unité de travail (106), une tête d'attelage (30) destinée à être liée audit véhicule moteur (2), et un timon (28) lié à chacune de ces extrémités d'une part audit châssis (25) et d'autre part à ladite tête d'attelage (30) au moyen d'une articulation respective (29, 31) d'axe dirigé vers le haut.

7. Faucheuse selon la revendication 6, ***caractérisée par le fait que*** ledit organe de manoeuvre (118) est lié d'une part audit châssis (25) et d'autre part audit timon (28).

8. Faucheuse selon l'une quelconque des revendications 1 à 7, ***caractérisée par le fait que*** ladite au moins une unité de travail latérale (5, 6 ; 106) est disposée en arrière dudit véhicule moteur (2).

9. Faucheuse selon la revendication 1, ***caractérisée par le fait que*** ledit capteur (21) permet en sus de mesurer l'angle de lacet dudit véhicule moteur (2).

10. Faucheuse selon la revendication 1, ***caractérisée par le fait que*** ledit dispositif de pilotage (20) comporte en sus un moyen de détection (24) destiné à informer ladite unité de commande (22) lorsque ladite au moins une unité de travail (5, 6 ; 106) a atteint une position centrale.

11. Faucheuse selon la revendication 10, ***caractérisée par le fait que*** ledit moyen de détection (24) est un capteur de position destiné à mesurer la position transversale de ladite au moins une unité de travail (5, 6 ; 106) par rapport audit véhicule moteur (2).

## Claims

1. Agricultural mower comprising:
- at least one front working unit (4) intended to cut a standing product,
- at least one lateral working unit (5, 6; 106) intended to cut a standing product,
- connecting devices (10, 11; 111) intended to connect the said working units (4, 5, 6; 106) to a motor vehicle (2),
- one at least of the said connecting devices (10, 11; 111) allowing, during work, the corresponding working unit (4, 5, 6; 106) to move transversely with respect to a direction of forward travel (3) of the said mower (1; 101),
- an operating element (18; 118) intended to cause the said transverse movement of the said at least one working unit (4, 5, 6; 106),
- a control device (20) intended to control the said operating element (18; 118)
***characterized in* that** the control device (20) comprises a sensor (21) intended to measure the roll angle of the said mower (1; 101) and a driving unit (22) treating the information originating from the said sensor (21) and driving a distributor (23) intended to act on the said operating element (18; 118), so as to transversely move the said at least one lateral working unit (5, 6; 106), so as to keep an optimum cutting overlap (19) value.

2. Mower as claimed in Claim 1, ***characterized in* that** the connecting device (11) of the said at least one lateral working unit (5, 6) comprises a front part (14a) intended to be connected to the said motor vehicle (2) and a rear part (14b) to which the said at least one working unit (5, 6) is connected, the said front part (14a) and the said rear part (14b) are connected to one another by means of link rods (17) defining a deformable quadrilateral.

3. Mower as claimed in Claim 2, ***characterized in* that** the said link rods (17) define a trapezium converging towards the front.

4. Mower as claimed in Claim 2 or 3, ***characterized in* that** the said rear part (14b) supports two working units (5, 6).

5. Mower as claimed in any one of Claims 2 to 4, ***characterized in* that** the said operating element (18) is connected, on the one hand, to the said front part (14a) and, on the other hand, to the said rear part (14b).

6. Mower as claimed in Claim 1, ***characterized in* that** the said connecting device (111) of the said at least one lateral working unit (106) comprises a frame (25) resting on the ground by means of wheels (27) and to which the said working unit (106) is connected, a hitching head (30) intended to be connected to the said motor vehicle (2) and a drawbar (28) connected at each of its ends to, on the one hand, the said frame (25) and, on the other hand, the said hitching head (30) by means of a respective articulation (29, 31) the axis of which is directed upwards.

7. Mower as claimed in Claim 6, ***characterized in* that** the said operating element (118) is connected, on the one hand, to the said frame (25) and, on the other hand, to the said drawbar (28).

8. Mower as claimed in any one of Claims 1 to 7, ***characterized in* that** the said at least one lateral working unit (5, 6; 106) is arranged at the rear of the said motor vehicle (2).

9. Mower as claimed in Claim 1, ***characterized in* that** the said sensor (21) additionally allows the yaw angle of the said motor vehicle (2) to be measured.

10. Mower as claimed in Claim 1, ***characterized in* that** the said control device (20) additionally comprises a detection means (24) intended to inform the said driving unit (22) when the said at least one working unit (5, 6; 106) has reached a central position.

11. Mower as claimed in Claim 10, ***characterized in* that** the said detection means (24) is a position sensor intended to measure the transverse position of the said at least one working unit (5, 6; 106) with respect to the said motor vehicle (2).

## Patentansprüche

1. Landwirtschaftliche Mähmaschine mit
- mindestens einer frontmontierten Arbeitseinheit (4), die dazu bestimmt ist, ein aufrecht stehendes Produkt zu mähen,
- mindestens einer seitlichen Arbeitseinheit (5, 6; 106), die dazu bestimmt ist, ein aufrecht stehendes Produkt zu mähen,
- Verbindungsvorrichtungen (10, 11; 111), die dazu bestimmt sind, die Arbeitseinheiten (4, 5, 6; 106) mit einem Triebfahrzeug (2) zu verbinden,
- wobei mindestens eine der Verbindungsvorrichtungen (10, 11; 111), bei der Arbeit eine Querverschiebung der entsprechenden Arbeitseinheit (4, 5, 6; 106) in Bezug zu einer Vorschubrichtung (3) der Mähmaschine (1; 101) ermöglicht,
- einem Betätigungselement (18; 118), das dazu bestimmt ist, die Querverschiebung der mindestens einen Arbeitseinheit (4, 5, 6; 106) hervorzurufen,
- einer Steuervorrichtung (20), die dazu bestimmt ist, das Betätigungselement (18; 118) zu steuern,
***dadurch gekennzeichnet,* dass** die Steuervorrichtung (20) einen Sensor (21), der dazu bestimmt ist, den Seitenneigungswinkel der Mähmaschine (1; 101) zu messen, und eine Steuervorrichtung (22) umfasst, die die von dem Sensor (21) kommende Information bearbeitet und einen Verteiler (23) steuert, der dazu bestimmt ist, auf das Betätigungselement (18; 118) einzuwirken, um die mindestens eine seitliche Arbeitseinheit (5, 6; 106) quer zu verschieben, um einen optimalen Überschnittwert (19) zu bewahren.

2. Mähmaschine nach Anspruch 1, ***dadurch gekennzeichnet,* dass** die Verbindungsvorrichtung (11) der mindestens einen seitlichen Arbeitseinheit (5, 6) einen vorderen Teil (14a), der dazu bestimmt ist, mit dem Triebfahrzeug (2) verbunden zu werden, und einen hinteren Teil (14b) umfasst, mit dem die mindestens eine Arbeitseinheit (5, 6) verbunden ist, wobei der vordere Teil (14a) und der hintere Teil (14b) miteinander mittels Triebstangen (17), die ein verformbares Trapezoid bilden, verbunden sind.

3. Mähmaschine nach Anspruch 2, ***dadurch gekennzeichnet,* dass** die Triebstangen (17) ein nach vorne konvergierendes Trapez definieren.

4. Mähmaschine nach Anspruch 2 oder 3, ***dadurch gekennzeichnet,* dass** der hintere Teil (14b) zwei Arbeitseinheiten (5, 6) trägt.

5. Mähmaschine nach irgend einem der Ansprüche 1 bis 4, ***dadurch gekennzeichnet,* dass** das Betätigungselement (18) einerseits mit dem vorderen Teil (14a) und andererseits mit dem hinteren Teil (14b) verbunden ist.

6. Mähmaschine nach Anspruch 1, ***dadurch gekennzeichnet,* dass** die Verbindungsvorrichtung (111) der mindestens einen seitlichen Arbeitseinheit (106) ein Rahmen (25), der auf dem Boden mittels Räder (27) aufliegt und mit dem die Arbeitseinheit (106) verbunden ist, einen Anhängerkopf (30), der dazu bestimmt ist, mit dem Triebfahrzeug (2) verbunden zu werden, und eine Deichsel (28) umfasst, die mit jedem ihrer Enden einerseits mit dem Rahmen (25) und andererseits mit dem Anhängerkopf (30) mittels eines jeweiligen Gelenks (29, 31) mit einer nach oben gerichteten Achse verbunden ist.

7. Mähmaschine nach Anspruch 6, ***dadurch gekennzeichnet,* dass** das Betätigungselement (118) einerseits mit dem Rahmen (25) und andererseits mit der Deichsel (28) verbunden ist.

8. Mähmaschine nach irgend einem der Ansprüche 1 bis 7, ***dadurch gekennzeichnet,* dass** die mindestens eine seitliche Arbeitseinheit (5, 6; 106) hinten am Triebfahrzeug (2) angeordnet ist.

9. Mähmaschine nach Anspruch 1, ***dadurch gekennzeichnet,* dass** es der Sensor (21) ferner ermöglicht, den Gierbewegungswinkel des Triebfahrzeugs (2) zu messen.

10. Mähmaschine nach Anspruch 1, ***dadurch gekennzeichnet,* dass** die Steuervorrichtung (20) ferner ein Erfassungsmittel (24) umfasst, das dazu bestimmt ist, die Steuereinheit (22) zu informieren, wenn die mindestens eine Arbeitseinheit (5, 6; 106) eine Mittelposition erreicht hat.

11. Mähmaschine nach Anspruch 10, ***dadurch gekennzeichnet,* dass** das Erfassungsmittel (24) ein Positionssensor ist, der dazu bestimmt ist, die Querposition der mindestens einen Arbeitseinheit (5, 6; 106) in Bezug auf das Triebfahrzeug (2) zu messen.
